(19) Europäisches Patentamt
European Patent Office
Office européen des brevets

(11) **EP 4 253 002 A1**

(12) **EUROPEAN PATENT APPLICATION**
published in accordance with Art. 153(4) EPC

(43) Date of publication:
**04.10.2023 Bulletin 2023/40**

(21) Application number: **21897966.4**

(22) Date of filing: **24.11.2021**

(51) International Patent Classification (IPC):
**B29C 55/06** (2006.01)   **D06J 1/04** (2006.01)
**B65H 23/188** (2006.01)

(52) Cooperative Patent Classification (CPC):
**B29C 55/06; B65H 23/188; D06J 1/04**

(86) International application number:
**PCT/JP2021/042960**

(87) International publication number:
**WO 2022/113994 (02.06.2022 Gazette 2022/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.11.2020   JP 2020194741**

(71) Applicant: **Zuiko Corporation**
**Ibaraki-shi**
**Osaka 5670082 (JP)**

(72) Inventors:
• **MINAMI Asuka**
**Ibaraki-shi, Osaka 567-0082 (JP)**
• **TANAKA Yasutaka**
**Ibaraki-shi, Osaka 567-0082 (JP)**

(74) Representative: **Dr. Gassner & Partner mbB**
**Wetterkreuz 3**
**91058 Erlangen (DE)**

(54) **SHEET MANUFACTURING METHOD AND PROCESSING DEVICE**

(57)   Provided are a sheet manufacturing method and a processing device with which it is possible to impart greater stretchability to a base material sheet.

The sheet manufacturing method is provided with: a conveying step of conveying a base material sheet (2); and a processing step of rotationally driving a pair of processing rolls (12, 14) arranged to sandwich a conveyance path (3) on which the base material sheet (2) is conveyed, in a manner that irregular portions (13, 15) formed along respective outer peripheral faces (12s, 14s) of the processing rolls (12, 14) engage with each other with a clearance to stretch the base material sheet (2) when the base material sheet (2) passes between the processing rolls (12, 14). In the conveying step, the base material sheet (2) is conveyed in a manner that: the base material sheet (2) is in contact with and along the outer peripheral face (12s) of one of the processing rolls (12) immediately prior to passing between the processing rolls (12, 14); and the tension (T1) in the conveyance direction applied to the base material sheet (2) immediately prior to reaching the outer peripheral face (12s) of the one of the processing rolls (12) is less than 10% of a breaking load of the base material sheet (2) in the conveyance direction prior to processing.

Fig. 1

## Description

## TECHNICAL FIELD

The present invention relates to a sheet manufacturing method and a processing device, and more specifically, relates to a technique to manufacture a stretchable sheet.

## BACKGROUND ART

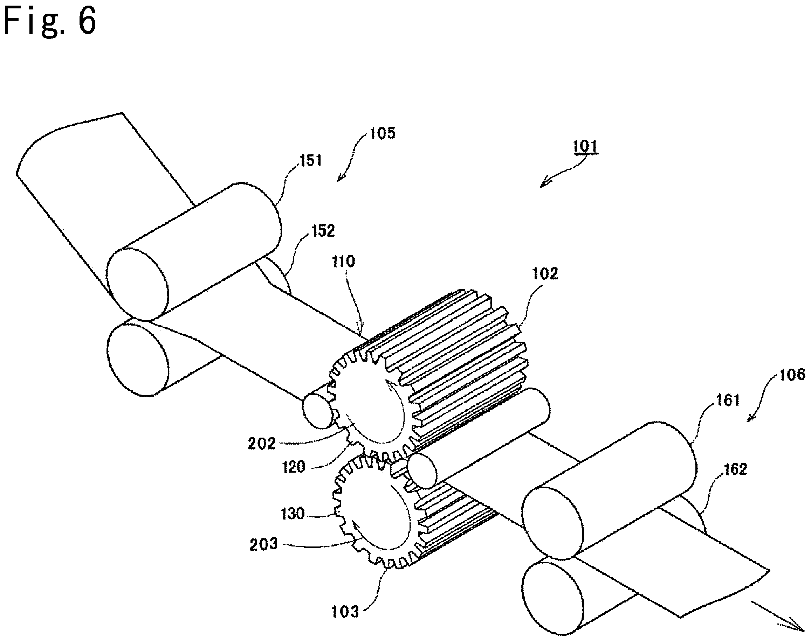

Various techniques have conventionally been proposed to impart stretchability to sheets by subjecting them to stretching processing. For example, Fig. 6 is a schematic view of a sheet processing device 101. As shown in Fig. 6, the sheet processing device 101 is provided with: a pair of rolls 102 and 103 having a pair of engaging teeth 120 and 130 provided on the peripheral parts thereof; and tension applying means 105 and 106 provided in front of and behind the pair of rolls 102 and 103. When the pair of rolls 102 and 103 is rotationally driven in the directions of the arrows 202 and 203, the teeth 120 and 130 of the processing rolls 102 and 103 engage with each other with a clearance, a base material sheet 110 is supplied to the clearance of the part where the teeth 120 and 103 engage with each other, and the base material sheet 110 is subjected to stretching processing in its flow direction to be imparted with stretchability. To more effectively impart stretchability to the base material sheet 110, the tension applying means 105 and 106 impart stretchability to the base material sheet 110 before and after the processing by the rolls 102 and 103.

The tension applying means 105 is provided with: a set of nip rolls 151 and 152 arranged upstream of the pair of rolls 102 and 103; a non-illustrated tension detector disposed on the conveyance path between the nip rolls 151 and 152 and the rolls 102 and 103; and a non-illustrated controller that controls the circumferential velocity of the nip rolls 151 and 152 based on the detection output of the tension detector.

The tension applying means 106 is provided with: a set of nip rolls 161 and 162 arranged downstream of the pair of rolls 102 and 103; a non-illustrated tension detector disposed on the conveyance path between the nip rolls 161 and 162 and the rolls 102 and 103; and a non-illustrated controller that controls the circumferential velocity of the nip rolls 161 and 162 based on the detection output of the tension detector.

The pre-processing tension applied to the base material sheet 110 by the nip rolls 151 and 152 of the tension applying means 105 is 10 to 90%, preferably, 20 to 80% of the breaking load of the base material sheet 110 prior to processing in the flow direction thereof. The post-processing tension applied to the base material sheet 110 by the nip rolls 161 and 162 of the tension applying means 106 is 5 to 80%, preferably, 10 to 70% of the breaking load of the base material sheet 110 prior to processing in the flow direction thereof (for example, see Patent Literature 1).

## CITATION LIST

## PATENT LITERATURE

[Patent Literature 1] Japanese Patent No. 4757139

## SUMMARY OF THE INVENTION

## PROBLEM TO BE SOLVED BY THE INVENTION

However, in a case where a sheet is processed as described above, since the range of the tension applied to the base material sheet 110 before and after processing is limited, there is a limit to the extent of the stretchability applicable to the base material sheet 110, so that it is difficult to impart greater stretchability exceeding this limit.

In view of such circumstances, a problem to be solved by the present invention is to provide a sheet manufacturing method and a processing device capable of imparting greater stretchability to the base material sheet.

## MEANS FOR SOLVING THE PROBLEM

To solve the above-mentioned problem, the present invention provides a sheet manufacturing method structured as follows:

The sheet manufacturing method is provided with: (i) a conveying step of conveying a base material sheet; and (ii) a processing step of rotationally driving a pair of processing rolls arranged to sandwich a conveyance path on which the base material sheet is conveyed, in a manner that irregular portions formed along respective outer peripheral faces of the processing rolls engage with each other with a clearance to stretch the base material sheet when the base material sheet passes between the processing rolls. In the conveying step, the base material sheet is conveyed in a manner that the base material sheet is in contact with and along the outer peripheral face of one processing roll of the processing rolls immediately prior to passing between the processing rolls and that a tension in a conveyance direction applied to the base material sheet immediately before the base material sheet reaches the outer peripheral face of the one processing roll is less than 10% of a breaking load of the base material sheet in the conveyance direction prior to processing.

According to the above-described method, the tension in the conveyance direction applied to the base material sheet when the base material sheet is conveyed along the outer peripheral face of the one processing roll can be made to gradually decrease as the base material sheet moves away from the engaging section where the irregular portions engage with each other between the processing rolls to the upstream side in the conveyance direction by using the friction between the base material sheet and the outer peripheral face of the one processing roll, and the tension in the conveyance direction applied to the base material sheet immediately before the base material sheet reaches the outer peripheral face of the one processing roll can be decreased. Moreover, the shrinkage of the base material sheet in the width direction orthogonal to the conveyance direction can be restrained by using the friction between the base material sheet and the outer peripheral face of the one processing roll. For this reason, compared with when stretching processing is immediately performed at the engaging section under a condition where tension is applied in the conveyance direction, greater stretchability can be imparted to the base material sheet.

When the tension of the base material sheet in the conveyance direction is less than 10% of the breaking load of the base material sheet in the conveyance direction prior to processing immediately before the base material sheet reaches the outer peripheral face of the one processing roll, the shrinkage of the base material sheet in the width direction can be restrained more than when the pre-processing tension of the base material sheet in the conveyance direction is not less than 10% of the breaking load of the base material sheet in the conveyance direction prior to processing, so that still greater stretchability can be imparted to the base material sheet.

Preferably, the sheet manufacturing method is further provided with a heating step of heating the one processing roll so that the temperature of the outer peripheral face of the one processing roll is not less than 10°C and not more than 60°C, preferably, not less than 30°C and not more than 60°C.

In this case, even when the conveyance speed of the base material sheet is high, the base material sheet can be processed without any breakage or damage occurring.

Preferably, in the conveying step, the base material sheet is conveyed in a manner that the base material sheet is along the outer peripheral face of the one processing roll within a range of not less than 180° and not more than 270° with the rotation center line of the one processing roll as the center.

In this case, the base material sheet is conveyed a longer distance along the outer peripheral face of the one processing roll, and when the base material sheet is heated by the one processing roll, the base material sheet can be heated sufficiently, so that greater stretchability can be imparted to the base material sheet.

Preferably, the processing rolls are supported in a manner that the distance between the processing rolls is changeable by moving at least one of the processing rolls. In the processing step, the amount of engagement between the irregular portions of the processing rolls is fixed or suppressed within a predetermined range.

In this case, since the distance between the pair of processing rolls can be increased, it is easy to thread the base material sheet between the processing rolls for preparation before starting the stretching processing. Since the amount of engagement between the irregular portions of the processing rolls are fixed or suppressed within a predetermined range during the stretching processing, the variation in the stretch amount of the base material sheet can be suppressed.

Moreover, to solve the above-mentioned problem, the present invention provides a sheet processing device structured as follows:

A sheet processing device is provided with a pair of processing rolls arranged to sandwich a conveyance path on which a base material sheet is conveyed, and rotating in a manner that irregular portions formed along respective outer peripheral faces engage with each other with a clearance. In the sheet processing device, the base material sheet is conveyed in a manner that the base material sheet is in contact with and along the outer peripheral face of one processing roll of the processing rolls immediately prior to passing between the processing rolls, and the following are further provided: (a) a driving roll disposed along the conveyance path until the base material sheet reaches the one processing roll, and rotationally driven to send out the base material sheet; and (b) a tension control device that controls rotation of one or both of the driving roll and the processing rolls so that a tension in the conveyance direction applied to the base material sheet immediately before the base material sheet reaches the one processing roll becomes less than 10% of a breaking load of the base material sheet in the conveyance direction prior to processing.

According to the above-described structure, the tension in the conveyance direction applied to the base material sheet when the base material sheet is conveyed along the outer peripheral face of the one processing roll can be made to gradually decrease as the base material sheet moves away from the engaging section where the irregular portions engage with each other between the processing rolls to the upstream side in the conveyance direction by using the friction between the base material sheet and the outer peripheral face of the one processing roll, and the tension in the conveyance direction applied to the base material sheet immediately before the base material sheet reaches the outer peripheral face of the one processing roll can be decreased. Moreover, the shrinkage of the base material sheet in the width direction orthogonal to the conveyance direction can be restrained by using the friction between the base material sheet and the outer peripheral face of the one processing roll. For this reason, compared with when stretching processing is immediately performed at the engaging section under a condition where tension is applied in the conveyance direction, greater stretchability can be imparted to the base material sheet.

When the tension of the base material sheet in the conveyance direction is less than 10% of the breaking load of the base material sheet in the conveyance direction prior to processing immediately before the base material sheet reaches the outer peripheral face of the one processing roll, the shrinkage of the base material sheet in the width direction can be restrained more than when the pre-processing tension of the base material sheet in the conveyance direction is not less than 10% of the breaking load of the base material sheet in the conveyance direction prior to processing, so that still greater stretchability can be imparted to the base material sheet.

Preferably, the sheet processing device is further provided with a heater that heats the one processing roll so that the temperature of the outer peripheral face of the one processing roll is not less than 10°C and not more than 60°C, preferably, not less than 30°C and not more than 60°C.

In this case, even when the conveyance speed of the base material sheet is high, the base material sheet 2 can be processed without any breakage or damage occurring.

Preferably, in the sheet processing device, the base material sheet is conveyed in a manner that the base material sheet is along the outer peripheral face of the one processing roll within a range of not less than 180° and not more than 270° with a rotation center line of the one processing roll as the center.

In this case, the base material sheet is conveyed a longer distance along the outer peripheral face of the one processing roll, and when the base material sheet is heated by the one processing roll, the base material sheet can be heated sufficiently, so that greater stretchability can be imparted to the base material sheet.

Preferably, the sheet processing device is further provided with: (c) a processing roll support mechanism that supports the processing rolls in a manner that the distance between the processing rolls is changeable; (d) a processing roll moving device that moves at least one of the processing rolls; and (e) separation preventing means for disengageably fixing or suppressing within a predetermined range the amount of engagement between the irregular portions of the processing rolls.

In this case, since the distance between the pair of processing rolls can be increased, it is easy to thread the base material sheet between the processing rolls for preparation prior to processing. The amount of engagement between the irregular portions of the processing rolls during the stretching processing are fixed or suppressed within a predetermined range by the separation preventing means, so that the variation in the stretch amount of the base material sheet can be suppressed.

## EFFECTS OF THE INVENTION

According to the present invention, greater stretchability can be imparted to the base material sheet.

## BRIEF DESCRIPTION OF THE DRAWINGS

[Fig. 1] Fig. 1 is a schematic view of a sheet processing device (first embodiment).
[Fig. 2] Fig. 2 is a block diagram of the sheet processing device (first embodiment).
[Fig. 3] Fig. 3 is an enlarged relevant part schematic view of the sheet processing device (first embodiment).
[Fig. 4] Fig. 4 is relevant part schematic views of a sheet processing device (second embodiment).
[Fig. 5] Fig. 5 is structural principle views of a lock mechanism (second embodiment).
[Fig. 6] Fig. 6 is an explanatory view of the sheet processing process.

## MODE FOR CARRYING OUT THE INVENTION

Hereinafter, embodiments of the present invention will be described with reference to the drawings.

<First embodiment>

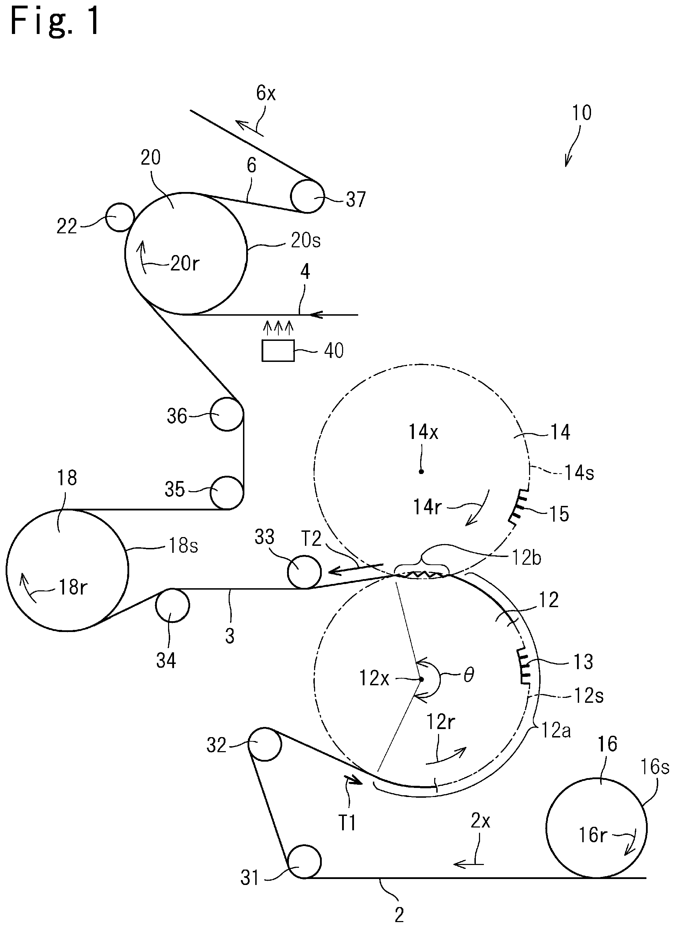

A sheet processing device 10 and a sheet manufacturing method of a first embodiment will be described with reference to Figs. 1 to 3.

Fig. 1 is a schematic view showing an outline structure of the sheet processing device 10. As shown in Fig. 1, in the sheet processing device 10, the following are arranged from the upstream side to the downstream side in the conveyance direction of a base material sheet 2 along a conveyance path 3 on which the base material sheet 2 is conveyed: a first driving roll 16; guide rolls 31 and 32; a pair of processing rolls 12 and 14; guide rolls 33 and 34; a second driving roll 18; guide rolls 35 and 36; a crimping roll 20 and a nip roll 22; and a guide roll 37.

The first driving roll 16 is rotationally driven in the direction indicated by the arrow 16r to feed out the base material sheet 2, and conveys the base material sheet 2 in contact with an outer peripheral face 16s of the first driving roll 16 at the same velocity as the circumferential velocity of the first driving roll 16. The base material sheet 2 which is conveyed in the direction indicated by the arrow 2x passes between the pair of processing rolls 12 and 14 via the guide rolls 31 and 32.

The circumferential velocity of the first driving roll 16 is made higher than that of the processing rolls 12 and 14. For example, the circumferential velocity of the first driving roll 16 is made 1.5 times that of the processing rolls 12 and 14. During the time until the first driving roll 16 reaches the processing rolls 12 and 14, if the tension in the conveyance direction applied to the base material sheet 2 is reduced to such an extent that the base material sheet 2 does not stretch, the width of the base material sheet 2 remains constant, for example, 350 mm.

The pair of processing rolls 12 and 14 is arranged to sandwich the conveyance path 3. One processing roll 12 has a plurality of spur gear-shaped or straight teeth 13 along an outer peripheral face 12s thereof. The teeth 13 are arranged at a predetermined pitch radially from a rotation center line 12x of the processing roll 12 and in the circumferential direction, and each tooth 13 extends parallel to the rotation center line 12x of the processing roll 12. Likewise, the other processing roll 14 has a plurality of spur gear-shaped or straight teeth 15 along an outer peripheral face 14s thereof. The teeth 15 are arranged at a predetermined pitch radially from a rotation center line 14x of the processing roll 14 and in the circumferential direction, and each tooth 15 extends parallel to the rotation center line 14x of the processing roll 14.

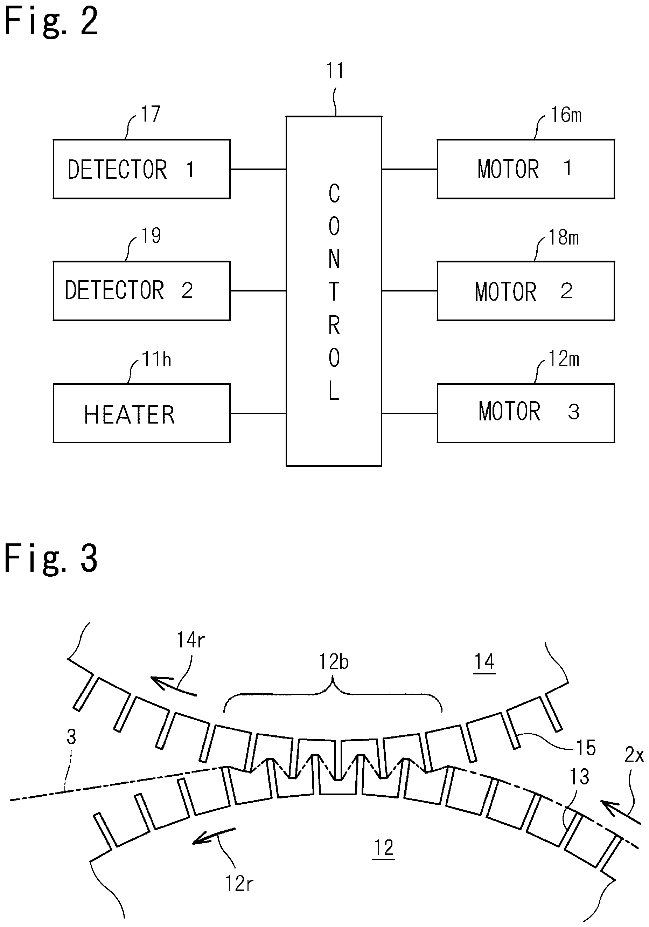

The pair of processing rolls 12 and 14 is rotationally driven in synchronization with each other in the directions indicated by the arrows 12r and 14r in such a manner that the teeth 13 and 15 engage with each other with a clearance. For example, non-illustrated engaging driving gears are fixed to the axis ends of non-illustrated rotation axes of the processing rolls 12 and 14, and the rotation of a third motor 12m (see Fig. 2) is transmitted to the driving gears. The teeth 13 and 15 function as irregular portions that engage with each other with a clearance.

The base material sheet 2 is subjected to stretching processing when passing through an engaging section 12b where the teeth 13 and 15 of the processing rolls 12 and 14 engage with each other with a clearance, and is imparted with stretchability. At this time, the base material sheet 2 which is stretched in the conveyance direction is shrunk in the width direction orthogonal to the conveyance direction. In a case where the width when the base material sheet 2 is introduced to the one processing roll 12 is 350 mm, the width immediately after the base material sheet 2 is discharged from the processing rolls 12 and 14 is 330 mm.

The temperature of the outer peripheral faces 12s and 14s of the processing rolls 12 and 14 is preferably made not less than 10°C and not more than the melting point temperature of the base material sheet 2, is more preferably made not less than 10°C and not more than 60°C, and is still more preferably made not less than 30°C and not more than 60°C. For this reason, a heater 11h (see Fig. 2) is provided for at least the one processing roll 12, preferably, for both of the processing rolls 12 and 14. For example, the outer peripheral face 12s of the processing roll 12 is heated by the heater 11h so that the temperature thereof becomes not less than 10°C and not more than 60°C, preferably, not less than 30°C and not more than 60°C. Alternatively, the outer peripheral faces 12s and 14s of both of the processing rolls 12 and 14 are heated so that the temperatures thereof become not less than 10°C and not more than 60°C, preferably, not less than 30°C and not more than 60°C. By heating the base material sheet 2 prior to processing, the base material sheet 2 can be processed without any breakage or damage occurring even if the conveyance speed of the base material sheet 2 is high, so that production efficiency improves. While the heater is preferably provided inside the processing rolls 12 and 14, it may be provided outside.

A residual heat heater that preliminarily heats the base material sheet 2 prior to processing may be provided upstream of the processing rolls 12 and 14.

The base material sheet 2 is conveyed in a manner that it is in contact with and along the outer peripheral face 12s of the processing roll 12 immediately prior to passing between the processing rolls 12 and 14. That is, the conveyance path 3 includes a winding section 12a along the outer peripheral face 12s of the processing roll 12 immediately in front of the engaging section 12b.

The range of the winding section 12a and the engaging section 12b, that is, the angle θ centered on the rotation center line 12x of the one processing roll 12 is preferably not less than 180° and not more than 270°. In this case, the base material sheet 2 is conveyed a longer distance along the outer peripheral face 12s of the one processing roll 12, and when the base material sheet 2 is heated by the one processing roll 12, greater stretchability can be imparted to the base material sheet 2.

After passing between the pair of processing rolls 12 and 14, the base material sheet 2 reaches the second driving roll 18 via the guide rolls 33 and 34.

The second driving roll 18 is rotationally driven in the direction indicated by the arrow 18r, and conveys the base material sheet 2 in contact with an outer peripheral face 18s of the second driving roll 18 at the same velocity as the circumferential velocity of the second driving roll 18.

The circumferential velocity of the second driving roll 18 is made higher than that of the processing rolls 12 and 14 according to the stretch ratio of the base material sheet 2 so that the stretched base material sheet 2 is pulled out from between the processing rolls 12 and 14 in a stable state. For example, the circumferential velocity of the second driving roll 18 is made 3.2 times that of the processing rolls 12 and 14.

In this case, since the shrinkage of the base material sheet 2 in the width direction orthogonal to the conveyance direction is not restrained after the base material sheet 2 is separated from the teeth 13 and 15 of the processing rolls 12 and 14, when pulled out from between the processing rolls 12 and 14, the base material sheet 2 shrinks in the width direction between the processing rolls 12 and 14 and the second driving roll 18. For example, when the width immediately after discharge from between the processing rolls 12 and 14 is 330 mm, the width at the second driving roll 18 is 290 mm.

The base material sheet 2 is laminated on an additional sheet 4 at the crimping roll 20, so that a composite sheet 6 where the sheets 2 and 4 are joined together is formed. The composite sheet 6 is conveyed to the subsequent process via the guide roll 37 as indicated by the arrow 6x.

For example, the base material sheet 2 is bonded to the additional sheet 4 where a hot-melt adhesive is applied by a hot-melt application device 40. The base material sheet 2 and the additional sheet 4 may be joined together by ultrasonic joining or the like instead of bonding.

The crimping roll 20 is rotationally driven in the direction indicated by the arrow 20r, and conveys the base material sheet 2 in contact with an outer peripheral face 20s of the crimping roll 20 at the same velocity as the circumferential velocity of the crimping roll 20.

The circumferential velocity of the crimping roll 20 may be the same as that of the second driving roll 18 or may be higher than that of the second driving roll 18.

In the latter case, the base material sheet 2 shrinks in the width direction between the second driving roll 18 and the crimping roll 20 since it is pulled out from the second driving roll 18 by the crimping roll 20.

A single-layer sheet formed of only the base material sheet 2 may be manufactured without the additional sheet 4 being joined. In this case, the crimping roll 20, the nip roll 22, the hot-melt application device 40 and the like are unnecessary.

Fig. 2 is a block diagram of the sheet processing device 10. As shown in Fig. 2, in the sheet processing device 10, the following are connected to a control portion 11 such as a sequencer that controls the entire sheet processing device 10; a first motor 16m that rotationally drives the first driving roll 16; a second motor 18m that rotationally drives the second driving roll 18; a third motor 12m that rotationally drives the pair of processing rolls 12 and 14; a first detector 17 that detects a first tension $T1$ (see Fig. 1) in the conveyance direction applied to the base material sheet 2 immediately before the base material sheet 2 reaches the outer peripheral face 12s of the one processing roll 12; a second detector 19 that detects a second tension $T2$ (see Fig. 1) in the conveyance direction applied to the base material sheet 2 immediately after the base material sheet 2 is discharged from between the processing rolls 12 and 14; and the heater 11h.

While monitoring the first tension $T1$ based on an output signal from the first detector 17, the control portion 11 (a) adjusts the rotation speed of the first motor 16m to control the rotation of the first driving roll 16 and/or (b) adjusts the rotation speed of the third motor 12m to control the rotation of the pair of processing rolls 12 and 14 so that the first tension $T1$ is less than a first predetermined value. In this case, the control portion 11, the first detector 17, the first motor 16m and/or the third motor 12m function as a tension control device. The first predetermined value may be less than 10% of the breaking load of the base material sheet 2 in the conveyance direction prior to processing.

Moreover, while monitoring the second tension $T2$ based on an output signal from the second detector 19, the control portion 11 may (a) adjust the rotation speed of the second motor 18m to control the rotation of the second driving roll 18 and/or (b) adjust the rotation speed of the third motor 12m to control the rotation of the pair of processing rolls 12 and 14 so that the second tension $T2$ is higher a second predetermined value. Since it is necessary only that the second predetermined value be high to the extent that the base material sheet 2 stretched at the engaging section 12b is pulled out from between the processing rolls 12 and 14 in a stable state, when the stretch ratio at the engaging section 12b is high to some extent, for example, the second predetermined value may be less than 10% of the breaking load of the base material sheet 2 in the conveyance direction prior to processing, and is more preferably less than 5%.

Fig. 3 is a relevant part schematic view where the neighborhood of the engaging section 12b of the pair of processing rolls 12 and 14 of the sheet processing device 10 is enlarged. As shown in Fig. 3, the base material sheet 2 conveyed along the conveyance path 3 is conveyed in the direction indicated by the arrow 2x while being supported by the teeth 13 of the one processing roll 12, and when it reaches the engaging section 12b, the parts thereof supported between the adjoining teeth 13 are pushed down toward the inside of the one processing roll 12 by the teeth 15 of the other processing roll 14, whereby at the engaging section 12b, a tension $T_d$ in the conveyance direction (not shown; the magnitude differs according to the position where the base material sheet 2 engages with the teeth 13 and 15 of the processing rolls 12 and 14) occurs on the base material sheet 2.

At the winding section 12a before the engaging section 12b, a frictional force with the teeth 13 acts on the base material sheet 2. The tension of the base material sheet 2 in the conveyance direction decreases as the base material sheet 2 moves away from the engaging section 12b, that is, as it moves toward the upstream side in the conveyance direction.

Therefore, the first tension $T1$ in the conveyance direction (see Fig. 1) applied to the base material sheet 2 immediately before the base material sheet 2 reaches the outer peripheral face 12s of the one processing roll 12 can be made lower than the tension $T_d$ in the conveyance direction applied to the base material sheet 2 at the engaging section 12b. For this reason, stretching processing can be performed on the base material sheet 2 under a processing condition where the first tension $T1$ is less than 10% of the breaking load of the base material sheet 2 in the conveyance direction prior to processing.

At the engaging section 12b, the middle positions of the parts of the base material sheet 2 supported by the adjoining teeth 13 of the one processing roll 12 are pushed down by the teeth 15 of the other processing roll 14, whereby a frictional force occurs on the base material sheet 2. By this frictional force, the second tension $T2$ (see Fig. 1), in the conveyance direction, of the base material sheet 2 immediately after the base material sheet 2 passes through the engaging section 12b is made lower than the tension $T_d$ in the conveyance direction applied to the base material sheet 2 at the engaging section 12b.

Moreover, when the base material sheet 2 is conveyed along the outer peripheral face 12s of the one processing roll 12 at the winding section 12a, its shrinkage in the width direction orthogonal to the conveyance direction is restrained by the frictional force with the outer peripheral face 12s of the one processing roll 12, so that the base material sheet 2 does not break even if the tension $T_d$ of the base material sheet 2 in the conveyance direction exceeds the breaking load at the one processing roll 12b. For this reason, stretching processing can be performed on the base material sheet 2 without any breakage or damage occurring on the base material sheet 2 under a processing condition where the tension $T_d$ applied to the base material sheet 2 at the engaging section 12b is higher than 90% of the breaking load of the base material sheet 2 in the conveyance direction prior to processing.

As described above, by the base material sheet 2 being wound on the one processing roll 12, even when the tension applied to the base material sheet 2 before and after processing is out of the conventionally known range (10 to 90% of the breaking load, etc.), stretching processing can be performed on the base material sheet 2. Consequently, greater stretchability can be imparted to the base material sheet 2.

<Experimental example>

An experimental example will be described in which a sheet imparted with stretchability was manufactured by using the sheet processing device 10 of the first embodiment.

While the processing rolls 12 and 14 were heated to 35 to 55°C, the base material sheet 2 which is a polyolefin-based stretchable nonwoven fabric with a width of 350 mm was processed under various conditions where the circumferential velocities of the processing rolls 12, 14, 16 and 18 were combined. During the processing, the tension of the base material sheet 2 in the conveyance direction was measured between the first driving roll 16 and the one processing roll 12. In addition, the stretch ratio of the base material sheet 2 after processing was determined.

As a result, when the tension was 0.3 to 7.5 N, the stretch ratio of the base material sheet 2 was 1.8 to 2.8 times.

Moreover, when a test piece (25 mm in width and 100 mm in length) for a tensile test was made from the base material sheet 2 prior to processing and a tensile test was performed with a load cell velocity of 300 mm/min., the breaking load was 23.2 N (the average value among three test pieces). Converting from these, the breaking load, in the conveyance direction, of the base material sheet 2 with a width of 350 mm prior to processing was (23.2 N/25 mm)X350 mm=325 N.

Therefore, the tension (0.3 to 7.5 N) in the conveyance direction applied to the base material sheet 2 with a width of 350 mm immediately before the base material sheet 2 reached the outer peripheral face 12s of the one processing roll 12 was 0.9 to 2.3% of the breaking load (325 N) of the base material sheet 2 in the conveyance direction prior to processing, and was less than 10%.

That is, even when the tension in the conveyance direction applied to the base material sheet 2 immediately before the base material sheet 2 reached the one processing roll 12 was out of the conventionally known tension limit range (10 to 90% of the breaking load), stretching processing could be performed on the base material sheet 2, and compared with when the tension is within the conventionally known tension limit range, greater stretchability could be imparted to the base material sheet 2.

Subsequently, a sheet manufacturing method of the first embodiment will be summarized.

The sheet manufacturing method is provided with: (i) a conveying step of conveying the base material sheet 2; and (ii) a processing step of rotationally driving the pair of processing rolls 12 and 14 arranged to sandwich the conveyance path 3 on which the base material sheet 2 is conveyed, in a manner that the irregular portions 13 and 15 formed along the respective outer peripheral faces 12s and 14s of the processing rolls 12 and 14 engage with each other with a clearance to stretch the base material sheet 2 when the base material sheet 2 passes between the processing rolls 12 and 14. In the conveying step, the base material sheet 2 is conveyed in a manner that it is in contact with and along the outer peripheral face 12s of the processing roll 12 immediately prior to passing between the processing rolls 12 and 14 and that the tension in the conveyance direction applied to the base material sheet 2 immediately before the base material sheet 2 reaches the outer peripheral face 12s of the one processing rolls 12 is less than 10% of the breaking load of the base material sheet 2 in the conveyance direction prior to processing.

According to the above-described method, the tension in the conveyance direction applied to the base material sheet 2 when the base material sheet 2 is conveyed along the outer peripheral face 12s of the one processing roll 12 can be made to gradually decrease as the base material sheet 2 moves away from the engaging section where the irregular portions 13 and 15 engage with each other between the processing rolls 12 and 14 to the upstream side in the conveyance direction by using the friction between the base material sheet 2 and the outer peripheral face 12s of the one processing roll 12, and the tension in the conveyance direction applied to the base material sheet 2 immediately before the base material sheet 2 reaches the outer peripheral face 12s of the one processing roll 12 can be decreased. Moreover, the shrinkage of the base material sheet 2 in the width direction orthogonal to the conveyance direction can be restrained by using the friction between the base material sheet 2 and the outer peripheral face 12s of the one processing roll 12. For this reason, compared with when stretching processing is immediately performed at the engaging section under a condition where tension is applied in the conveyance direction, greater stretchability can be imparted to the base material sheet.

When the tension of the base material sheet 2 in the conveyance direction is less than 10% of the breaking load of the base material sheet 2 in the conveyance direction prior to processing immediately before the base material sheet 2 reaches the outer peripheral face 12s of the one processing roll 12, the shrinkage of the base material sheet 2 in the width direction can be restrained more than when the pre-processing tension of the base material sheet 2 in the conveyance direction is not less than 10% of the breaking load of the base material sheet 2 in the conveyance direction prior to processing, so that still greater stretchability can be imparted to the base material sheet.

Preferably, the sheet manufacturing method is further provided with a heating step of heating the one processing roll 12 so that the temperature of the outer peripheral face 12s of the one processing roll 12 is not less than 10°C and not more than 60°C, preferably, not less than 30°C and not more than 60°C.

In this case, even when the conveyance speed of the base material sheet 2 is high, the base material sheet 2 can be processed without any breakage or damage.

Preferably, in the conveying step, the base material sheet 2 is conveyed in a manner that it is along the outer peripheral face 12s of the one processing roll 12 within a range of not less than 180° and not more than 270° with the rotation center line 12x of the one processing roll 12 as the center.

In this case, the base material sheet 2 is conveyed a longer distance along the outer peripheral face 12s of the one processing roll 12, and when the base material sheet 2 is heated by the one processing roll 12, the base material sheet 2 can be heated sufficiently, so that greater stretchability can be imparted to the base material sheet 2.

<First modification>

A structure is possible where the detectors 17 and 19 (see Fig. 2) that detect the tension of the base material sheet 2 are not provided. For example, when the pre-processing tension and post-processing tension of the base material sheet 2 can be set to predetermined values and the operating conditions of the motors 12m, 14m and 16m capable of processing the base material sheet at a desired stretch ratio are known in advance, the pre-processing tension and post-processing tension of the base material sheet 2 become predetermined values while the rotation speeds, load torques and the like of the motors 12m, 14m and 16m are controlled without the tension of the base material sheet 2 being detected by the detectors 17 and 19 during operation, so that the base material sheet can be made to be processed at a desired stretch ratio.

<Second embodiment>

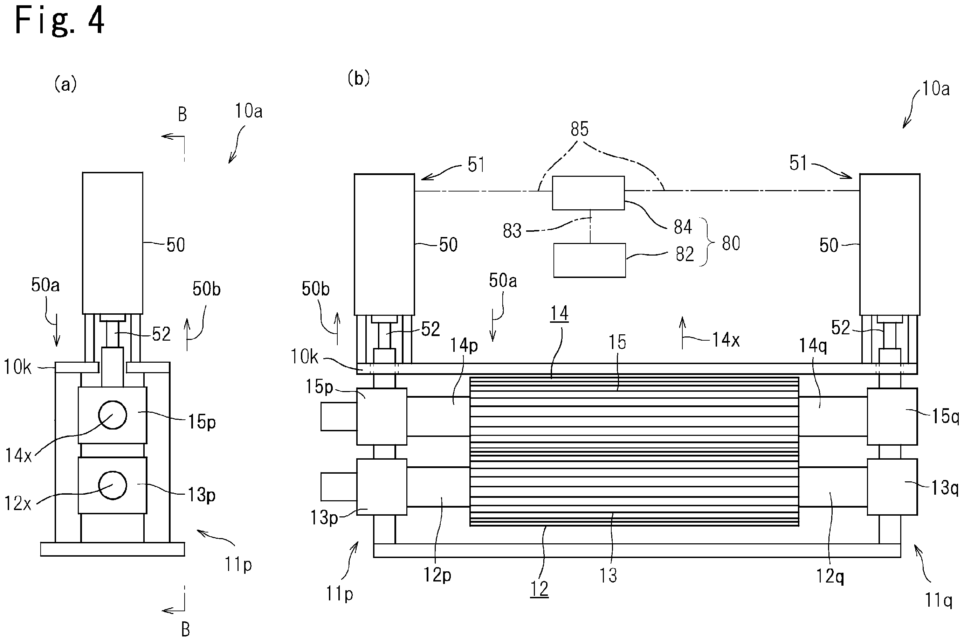

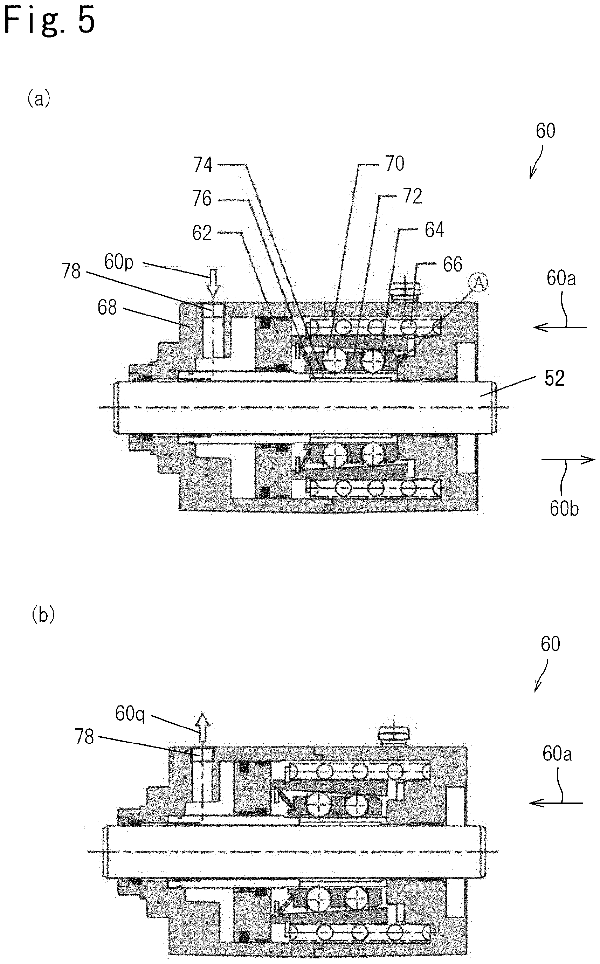

A sheet processing device 10a and a sheet manufacturing method of a second embodiment structured so that the distance between the processing rolls 12 and 14 can be increased will be described with reference to Figs. 4 and 5. The sheet processing device 10a of the second embodiment has substantially the same structure as the sheet processing device 10 of the first embodiment. In the following, differences from the sheet processing device 10 of the first embodiment will be mainly described, and the same reference numerals will be used for the same elements as those of the sheet processing device 10 of the first embodiment,

Fig. 4 is schematic views showing the structure of a relevant part of the sheet processing device 10a. Fig. 4(a) is a schematic view viewed in the direction of the rotation center lines 12x and 14x of the processing rolls 12 and 14. Fig. 4(b) is a schematic view viewed along the line B-B of Fig. 4(a). As shown in Fig. 4, the sheet processing device 10a is provided with processing roll support mechanisms 11p and 11q and air cylinders 50.

The processing roll support mechanisms 11p and 11q support the processing rolls 12 and 14 in such a manner that the distance between the processing rolls 12 and 14 is changeable. Specifically, bearing portions 13p and 13q rotatably supporting shaft portions 12p and 12q of the one processing roll 12 are fixed to a body frame 10k of the sheet processing device 10a. Bearing portions 15p and 15q rotatably supporting shaft portions 14p and 14q of the other processing roll 14 are supported by the body frame 10k so as to be movable in the directions indicated by the arrows 50a and 50b.

The air cylinders 50 are fixed to the body frame 10k with the rods 52 facing downward. The bearing portions 15p and 15q of the other processing roll 14 are coupled to the rods 52 of the air cylinders 50. When the rods 52 of the air cylinders 50 shrink, the other processing roll 14 moves upward from the position shown by the solid line in Fig. 4 in the direction indicated by the arrow 50b. The air cylinders 50 serve as a processing roll moving device 51 that moves at least the processing roll 14 of the processing rolls 12 and 14.

When stretch processing of the base material sheet is performed, the rods 52 of the air cylinders 50 protrude to be stretched as shown in Fig. 4, so that the respective teeth 13 and 15 of the processing rolls 12 and 14 engage with each other with a clearance as in the above-described Fig. 3. For example, when the rods 52 protrude, the bearing portions 15p and 15q of the processing roll 14 abut on non-illustrated predetermined parts of the body frame 10k to be inhibited from moving, so that the distance between the processing rolls 12 and 14 is maintained at a predetermined value. Thereby, the pushing amount of the base material sheet during stretching processing can be set to a predetermined value.

The pushing amount of the base material sheet during stretching processing may be defined by the amount of engagement between the teeth 13 and 15 of the processing rolls 12 and 14. In this case, when the pushing amount of the base material sheet during stretching processing, that is, the amount of engagement between the teeth 13 and 15 of the processing rolls 12 and 14 is D, the radii of the outer peripheral faces 12s and 14s of the processing rolls 12 and 14 (see Fig. 1) are R1 and R2 and the distance between the rotation center lines 12x and 14x of the processing rolls 12 and 14 is L, the pushing amount D of the base material sheet during stretching processing and the amount D of engagement between the teeth 13 and 15 of the processing rolls 12 and 14 are defined by the following expression 1:

$$D=R1+R2-L \quad \text{(expression 1)}$$

When the rods 52 of the air cylinders 50 shrink in the direction indicated by the arrow 50b in Fig. 4, the other processing roll 14 moves upward from the position indicated by the solid line in Fig. 4 in the direction indicated by the arrow 50b to be separated from the one processing roll 12. This disengages the teeth 13 and 15 of the processing rolls 12 and 14 to form an interval between the processing rolls 12 and 14, which facilitates preparatory work such as threading the base material sheet between the processing rolls 12 and 14 prior to processing.

In a case where typical air cylinders are used as the air cylinders 50, the rods 52 move backward when a reaction force acts that overcomes the protruding force to protrude the rods 52. According to the differences in the basis weight, width, conveyance speed and the like of the base material sheet made of nonwoven fabric or the like, the following can occur: The resistance force (reaction force) of the base material sheet overcomes the protruding force of the rods 52 to increase the distance L between the rotation center lines 12x and 14x of the processing rolls 12 and 14 and change the pushing amount D of the base material sheet, so that variation occurs in the stretch amount of the base material sheet.

To suppress such variation in the stretch amount of the base material sheet, the air cylinders 50 are each provided with a lock mechanism 60 shown in Fig. 5.

Fig. 5 is structural principle views of the lock mechanism 60. Fig. 5(a) shows an unlocked state, and Fig. 5(b) shows a locked state. As shown in Fig. 5, in the lock mechanism 60, a tapering 64 is fixed to a release piston 62, and the release piston 62 and the tapering 64 are pushed by a break spring 66 in the direction indicated by the arrow 60a. The tapering 64 is a tubular member having a cylindrical outer peripheral face and a conical inner peripheral face the inner diameter of which increases in the direction indicated by the arrow 60a. Inside the tapering 64, a steel ball 70 is rotatably held by a ball retainer 72. A brake shoe holder 74 and a brake shoe 76 are disposed between the steel ball 70 and the rod 52.

When compressed air is supplied to an open port 78 as indicated by the arrow 60p in Fig. 5(a), the release piston 62 and the tapering 64 move in the direction indicated by the arrow 60b against the spring force of the break spring 66, so that the rod 52 is unlocked. At this time, as indicated by reference designation A, the ball retainer 722 abuts on a housing 68.

When air is exhausted from the open port 78 as indicated by the arrow 60q in Fig. 5(b), the release piston 62 and the tapering 64 are pushed to move in the direction indicated by the arrow 60a by the break spring 66. The spring force of the break spring 66 is increased by the wedge effect of the tapering 64 and transmitted to the steel ball 70, and acts on the brake shoe holder 74 and the brake shoe 76. Thereby the rod 52 is tightened with great force to be locked.

The lock mechanism 60 serves as separation preventing means for disengageably fixing the amount D of engagement between the irregular portions 13 and 15 of the processing rolls 12 and 14. Since the pushing amount D of the base material sheet can be fixed by using the lock mechanism 60 during the stretching processing of the base material sheet, the variation in the stretch amount of the base material sheet due to the differences in the basis weight, width, conveyance speed and the like of the base material sheet can be suppressed.

Instead of providing the lock mechanism 60 for the air cylinders 50, a processing roll holding device 80 may be provided as shown in Fig. 4.

The processing roll holding device 80 includes: a detector 82 for detecting the pushing amount D of the base material sheet during stretching processing; and a controller 84 that controls the air cylinders 50. For example, the detector 82 is a sensor that detects the position of the other processing roll 14, the positions of the bearing portions 15p and 15q of the other processing roll 14 and the protrusion length of the rods 52 of the air cylinders 50.

The controller 84 calculates the pushing amount D of the base material sheet during stretching processing based on a detection signal 83 from the detector 82, and controls the air cylinders 50 so that the pushing amount D is maintained within a certain range while monitoring the pushing amount D. For example, when the pushing amount D of the base material sheet during stretching processing becomes lower than a predetermined value, the controller 84 sends out to the air cylinders 50 a control signal 85 to make the teeth 15 of the other processing roll 14 push the base material sheet again to the pushing amount of the base material sheet at the time of start of the stretching processing.

The processing roll holding device 80 serves as the separation preventing means for disengageably suppressing the amount D of engagement between the irregular portions 13 and 15 of the processing rolls 12 and 14 within a predetermined range. Since the pushing amount of the base material sheet can be maintained substantially constant by using the processing roll holding device 80 during the stretching processing of the base material sheet, the variation in the stretch amount of the base material sheet due to the differences in the basis weight, width, conveyance speed and the like of the base material sheet can be suppressed.

The separation preventing means may be structured so as to fix or suppress within a predetermined range the positions of the bearing portions 15p and 15q of the other processing roll 14 themselves instead of the air cylinders 50.

Moreover, the following structure may be adopted: The processing roll support mechanisms 11p and 11q movably support both of the pair of processing rolls 12 and 14, the processing roll moving device moves both of the pair of processing rolls 12 and 14, and the separation preventing means disengageably fixes or suppresses within a predetermined range the amount D of engagement between the irregular portions 13 and 15 of the processing rolls 12 and 14.

In the sheet manufacturing method of the second embodiment, the following features are added to that of the first embodiment: The processing rolls 12 and 14 are supported in such a manner that the distance between the processing rolls 12 and 14 is changeable by moving at least the processing roll 14 of the processing rolls 12 and 14. In the processing step, the amount D of engagement between the irregular portions 13 and 15 of the processing rolls 12 and 14 is fixed or suppressed within a predetermined range.

In this case, since the distance between the pair of processing rolls 12 and 14 can be increased, it is easy to thread the base material sheet 2 between the processing rolls 12 and 14 for preparation before starting the stretching processing. Since the amount of engagement between the irregular portions 13 and 15 of the processing rolls 12 and 14 are fixed or suppressed within a predetermined range during the stretching processing, the variation in the stretch amount of the base material sheet 2 can be suppressed.

<Summary>

As described above, since the tension in the conveyance direction applied to the base material sheet 2 when the base material sheet 2 passes between the processing rolls 12 and 14 can be increased by using the friction between the base material sheet 2 and the outer peripheral face 12s of the one processing roll 12, greater stretchability can be imparted to the base material sheet 2.

The present invention is not limited to the above-described embodiments but may be carried out with various modifications being added.

For example, the irregular portions of the pair of processing rolls 12 and 14 are not limited to spur gear-shaped or straight teeth but may be in various modes such as helical gears or staggered irregular portions.

## DESCRIPTION OF REFERENCE NUMERALS

    2 Base material sheet
    3 Conveyance path
    10, 10a Sheet processing device
    11 Control portion (tension control device)
    11h Heater
    11p, 11q Processing roll support mechanism
    12 Processing roll
    12m Third motor (tension control device)
    12s Outer peripheral face
    13 Teeth (irregular portion)
    14 Processing roll
    14s Outer peripheral face
    15 Teeth (irregular portion)
    16 First driving roll
    16m First motor (tension control device)
    18 Second driving roll
    18m Second motor
    19 Second detector
    50 Air cylinder
    51 Processing roll moving device
    60 Lock mechanism (separation preventing means)
    80 Processing roll holding device (separation preventing means)

## Claims

1. A sheet manufacturing method comprising:

    a conveying step of conveying a base material sheet; and
    a processing step of rotationally driving a pair of processing rolls arranged to sandwich a conveyance path on which the base material sheet is conveyed, in a manner that irregular portions formed along respective outer peripheral faces of the processing rolls engage with each other with a clearance to stretch the base material sheet when the base material sheet passes between the processing rolls,
    wherein in the conveying step, the base material sheet is conveyed in a manner that the base material sheet is in contact with and along the outer peripheral face of one processing roll of the processing rolls immediately prior to passing between the processing rolls and that a tension in a conveyance direction applied to the base material sheet immediately before the base material sheet reaches the outer peripheral face of the one processing roll is less than 10% of a breaking load of the base material sheet in the conveyance direction prior to processing.

**2.** The sheet manufacturing method according to claim 1, further comprising a heating step of heating the one processing roll so that the temperature of the outer peripheral face of the one processing roll becomes not less than 10°C and not more than 60°C.

**3.** The sheet manufacturing method according to claim 1 or 2, wherein in the conveying step, the base material sheet is conveyed in a manner that the base material sheet is along the outer peripheral face of the one processing roll within a range of not less than 180° and not more than 270° with a rotation center line of the one processing roll as the center.

**4.** The sheet manufacturing method according to one of claims 1 to 3, wherein the processing rolls are supported in a manner that the distance between the processing rolls is changeable by moving at least one of the processing rolls, and
in the processing step, an amount of engagement between the irregular portions of the processing rolls is fixed or suppressed within a predetermined range.

**5.** A sheet processing device comprising a pair of processing rolls arranged to sandwich a conveyance path on which a base material sheet is conveyed, the processing rolls rotating in a manner that irregular portions formed along respective outer peripheral faces engage with each other with a clearance,

wherein the base material sheet is conveyed in a manner that the base material sheet is in contact with and along the outer peripheral face of one processing roll of the processing rolls immediately prior to passing between the processing rolls, and
the following are further provided:

a driving roll disposed along the conveyance path until the base material sheet reaches the one processing roll, and rotationally driven to send out the base material sheet; and
a tension control device that controls rotation of one or both of the driving roll and the processing rolls so that a tension in the conveyance direction applied to the base material sheet immediately before the base material sheet reaches the one processing roll becomes less than 10% of a breaking load of the base material sheet in the conveyance direction prior to processing.

**6.** The sheet processing device according to claim 5, further comprising a heater that heats the one processing roll so that the temperature of the outer peripheral face of the one processing roll becomes not less than 10°C and not more than 60°C.

**7.** The sheet processing device according to claim 5 or 6, wherein the base material sheet is conveyed in a manner that the base material sheet is along the outer peripheral face of the one processing roll within a range of not less than 180° and not more than 270° with a rotation center line of the one processing roll as the center.

**8.** The sheet processing device according to any one of claims 5 to 7, further comprising:

a processing roll support mechanism that supports the processing rolls in a manner that the distance between the processing rolls is changeable;
a processing roll moving device that moves at least one of the processing rolls; and
separation preventing means for disengageably fixing or suppressing within a predetermined range an amount of engagement between the irregular portions of the processing rolls.

# Fig. 1

# Fig. 2

| | | |
|---|---|---|
| DETECTOR 1 (17) | | MOTOR 1 (16m) |
| DETECTOR 2 (19) | CONTROL (11) | MOTOR 2 (18m) |
| HEATER (11h) | | MOTOR 3 (12m) |

# Fig. 3

# Fig. 4

(a)

(b)

EP 4 253 002 A1

# Fig. 5

(a)

(b)

EP 4 253 002 A1

Fig. 6

## INTERNATIONAL SEARCH REPORT

| | International application No. |
|---|---|
| | **PCT/JP2021/042960** |

| A. | CLASSIFICATION OF SUBJECT MATTER |
|---|---|

*B29C 55/06*(2006.01)i; *D06J 1/04*(2006.01)i; *B65H 23/188*(2006.01)i
FI:   B29C55/06; B65H23/188; D06J1/04

According to International Patent Classification (IPC) or to both national classification and IPC

| B. | FIELDS SEARCHED |
|---|---|

Minimum documentation searched (classification system followed by classification symbols)

B29C55/00-55/30; D06J1/04; B65H23/18-23/198

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2007-022066 A (KAO CORP) 01 February 2007 (2007-02-01)<br>paragraph [0049], fig. 8 | 1-8 |
| A | JP 2011-184833 A (UNICHARM CORP) 22 September 2011 (2011-09-22)<br>paragraph [0069] | 1-8 |
| A | JP 2013-231249 A (UNICHARM CORP) 14 November 2013 (2013-11-14)<br>paragraph [0033] | 1-8 |
| A | US 2010/0040875 A1 (DOW GLOBAL TECHNOLOGIES INC.) 18 February 2010<br>(2010-02-18)<br>paragraph [0207] | 1-8 |
| A | WO 2010/151398 A1 (THE PROCTER & GAMBLE COMPANY) 29 December 2010<br>(2010-12-29)<br>p. 11, line 16 to p. 12, line 16, fig. 7 | 1-8 |

| ☐ Further documents are listed in the continuation of Box C. | ☑ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **24 January 2022** | **01 February 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

# EP 4 253 002 A1

## INTERNATIONAL SEARCH REPORT
### Information on patent family members

International application No.

**PCT/JP2021/042960**

| Patent document cited in search report | | | Publication date (day/month/year) | Patent family member(s) | | | Publication date (day/month/year) |
|---|---|---|---|---|---|---|---|
| JP | 2007-022066 | A | 01 February 2007 | US | 2009/0035527 | A1 | |
| | | | | paragraph [0072], fig. 8 | | | |
| | | | | WO | 2006/115259 | A1 | |
| | | | | EP | 1876275 | A1 | |
| | | | | KR | 10-2008-0004529 | A | |
| | | | | CN | 101166858 | A | |
| | | | | KR | 10-1237367 | B1 | |
| JP | 2011-184833 | A | 22 September 2011 | US | 2013/0031813 | A1 | |
| | | | | paragraph [0123] | | | |
| | | | | US | 2015/0210000 | A1 | |
| | | | | WO | 2011/111579 | A1 | |
| | | | | EP | 2546402 | A1 | |
| | | | | CN | 102791918 | A | |
| JP | 2013-231249 | A | 14 November 2013 | US | 2015/0147530 | A1 | |
| | | | | paragraph [0044] | | | |
| | | | | US | 2018/0154607 | A1 | |
| | | | | WO | 2013/161983 | A1 | |
| | | | | EP | 2842734 | A1 | |
| | | | | CN | 104334341 | A | |
| US | 2010/0040875 | A1 | 18 February 2010 | WO | 2008/082915 | A1 | |
| | | | | CN | 101616791 | A | |
| WO | 2010/151398 | A1 | 29 December 2010 | US | 2010/0331799 | A1 | |

Form PCT/ISA/210 (patent family annex) (January 2015)

**EP 4 253 002 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4757139 B